# EUROPÄISCHE PATENTANMELDUNG

(11) **EP 1 779 990 A2**
(43) Veröffentlichungstag der Anmeldung: **02.05.2007**
(21) Anmeldenummer: 06022198.3
(22) Anmeldetag: 24.10.2006
(51) Int. Cl.: B29C 37/04

(54) **Bearbeitungsvorrichtung für Fensterrahmen**

(30) Priorität: 31.10.2005 DE 102005052020
(71) Anmelder: WILLI STÜRTZ MASCHINENBAU GmbH, 53577 Neustadt/Wied-Rott (DE)
(72) Erfinder: Zenker, Dieter, 50739 Köln (DE)
(74) Vertreter: Kossobutzki, Walter

(57) **Zusammenfassung**

Die Erfindung bezieht sich auf eine Vorrichtung zum Bearbeiten insbesondere der Schweißraupen von aus Kunststoffprofilen zusammengeschweißten Fensterrahmen, bestehend aus jeweils einer auf jeder Seite des zu bearbeitenden Fensterrahmens befindlichen Bearbeitungseinheit mit je einem Arbeitsschlitten und einem darauf angeordneten Bearbeitungskopf mit mindestens zwei unterschiedlichen und jeweils in einer Halterung gesicherten Bearbeitungswerkzeugen, die über ihre Halterungen zunächst aus einer Grundstellung in eine Arbeitsstellung und in der Arbeitsstellung zur Durchführung eines Arbeitshubes bewegbar sind, sowie aus einer Transporteinrichtung und mindestens einer Spanneinheit.

Um mit einer solchen Vorrichtung neben der üblichen Bearbeitung der Schweißraupen auch die Ecken eines bereits eingeschweißten und noch nicht von den Schweißraupen befreiten Kämpfers und Kämpferkreuzes sowie Trapez- und Spitzecken, also Ecken, die keinen rechten Winkel besitzen, zu bearbeiten und/oder sogenannte Stulpecken und Rahmenspitzen zu entfernen, sind die die Bearbeitungsköpfe (9a, 9b) tragenden Arbeitsschlitten (7a, 7b) in einer parallel zur Transportebene verlaufenden Ebene um mindestens die Breite des Fensterrahmens (1) quer zur Transportrichtung desselben verschiebbar und in einer weiteren, ebenfalls dazu parallelen Ebene, um mindestens 270° drehbar ausgebildet.

## Beschreibung

Die Erfindung bezieht sich auf eine Vorrichtung zum Bearbeiten insbesondere der Schweißraupen von aus Kunststoffprofilen zusammengeschweißten Fensterrahmen, bestehend aus jeweils einem auf jeder Seite des Fensterrahmens befindlichen Bearbeitungseinheit mit je einem Arbeitsschlitten und einem darauf geordneten Bearbeitungskopf mit mindestens zwei unterschiedlichen und jeweils in einer Halterung gesicherten Bearbeitungswerkzeugen, die über ihre Halterungen zunächst aus einer Grundstellung in eine Arbeitsstellung und in der Arbeitsstellung zur Durchführung eines Arbeitshubes bewegbar sind, sowie aus einer Transporteinrichtung und mindestens einer Spanneinheit.

Die Herstellung von Fensterrahmen aus Kunststoff - dies können sowohl Blendrahmen als auch Flügelrahmen sein - erfolgt in der Weise, dass zunächst meistens nur vier Kunststoffprofilstäbe - bei Fensterrahmen mit Kämpfer können es auch fünf oder mehr Kunststoffprofilstücke sein - auf eine vorgegebene Länge zugeschnitten, in eine Schweißmaschine eingelegt, ausgerichtet, eingespannt und danach an ihren Verbindungsflächen erhitzt und anschließend unter Druck unter Bildung von sogenannten Schweißraupen miteinander verschweißt werden. Im Anschluss daran müssen zumindest die sichtbaren Schweißraupen entfernt und gelegentlich auch noch andere Bearbeitungen am Fensterrahmen durchgeführt werden. Diese Bearbeitungen können entweder an einer Rahmenecke, an zwei Rahmenecken, an allen vier Rahmenecken und gegebenenfals auch an sogenannten Kämpferecken gleichzeitig durchgeführt werden. Die Anzahl der gleichzeitig zu bearbeitenden Ecken bzw. Rahmenecken und Kämpferecken ist dabei immer von der Ausgestaltung der jeweiligen Vorrichtung bzw. von der Anzahl der Bearbeitungsköpfe abhängig, die Bearbeitungsvorrichtung aufweist.

Die bekannten Bearbeitungsvorrichtungen können entweder eine, zwei, vier oder sogar sechs Bearbeitungseinheiten bzw. Bearbeitungsköpfe aufweisen, die mit Halterungen für die Aufnahme der unterschiedlichsten, jedoch meist auswechselbaren Bearbeitungswerkzeugen bestückt sind. Als Bearbeitungswerkzeuge können beispielsweise unterschiedliche Messer, Fräser, Bohrer und dergleichen vorhanden sein. Jede Halterung für ein Bearbeitungswerkzeug kann dabei einzeln mit ihrem Bearbeitungswerkzeug aus einer Grundstellung in eine Arbeitsstellung angestellt werden, nach deren Erreichung erst dann der Arbeitshub bzw. die eigentliche Bearbeitungsbewegung ausgeführt wird. Mit zunehmender Anzahl der Bearbeitungseinheiten bzw. Bearbeitungsköpfe, die eine solche Bearbeitungsvorrichtung aufweist, steigt zwangsläufig der Herstellungsaufwand und damit auch der Preis einer solchen Bearbeitungsvorrichtung.

Allen bekannten Vorrichtungen für das Bearbeiten, insbesondere für das Entfernen von Schweißraupen an bereits fertig geschweißten Fensterrahmen ist gemeinsam, dass mit denselben bei einem fertig geschweißten Fensterrahmen mit einem sogenannten Kreuzkämpfer die innerhalb des Fensterrahmen befindlichen Ecken des Kreuzkämpfers grundsätzlich nicht bearbeitet werden können. Dieses Problem wird in der Praxis bisher dadurch gelöst, dass zunächst der Kreuzkämpfer getrennt geschweißt und nach seiner Abkühlung an den Schweißstellen der Kreuzecken bearbeitet wird. Dieser vorgefertigte und bereits geputzte Kreuzkämpfer wird erst danach in einem folgenden Arbeitsgang bei der Schweißung des eigentlichen Fensterrahmens mit eingeschweißt. Dies wird allerdings als aufwendig und zeitraubend angesehen.

Ferner bereitet es mit den bekannten Vorrichtungen für die Bearbeitung von Fensterrahmen - neben der Bearbeitung von Schweißraupen in normalen Ecken - große Schwierigkeiten, sogenannte Trapezecken und Spitzecken, also solche Rahmenecken, die keinen rechten Winkel besitzen, von den störenden Schweißraupen zu befreien und/oder sogenannte Stulpecken und Rahmenspitzen zu entfernen, wofür grundsätzlich ein besonderes Bearbeitungswerkzeug erforderlich ist. Bei Stulpecken und Rahmenspitzen muss nämlich das Bearbeitungswerkzeug immer parallel zu einer Außenkante des Fensterrahmens bewegt werden.

Verhältnismäßig preiswerte Einkopf-Bearbeitungsvorrichtungen besitzen - im Gegensatz zu ihrem Namen - fast immer zwei Bearbeitungseinheiten bzw. Bearbeitungsköpfe, von denen sich immer eine Bearbeitungseinheit bzw. ein Bearbeitungskopf oberhalb und eine Bearbeitungseinheit bzw. ein Bearbeitungskopf unterhalb des geschweißten und zu bearbeitenden Fensterrahmens befindet. Bei einer solchen Beabeitungsvorrichtung ist immer eine horizontale Transporteinrichtung mit einem Tisch vorgesehen, wobei der Tisch lediglich der Drehung des geschweißten Fensterrahmens dient, damit nacheinander alle Ecken des Fensterrahmens auch in den Bereich der Bearbeitungsvorrichtung gelangen. Seitlich dieses Tisches ist dabei eine Zentrierecke vorhanden, in die immer nur die zu bearbeitende Ecke des Fensterrahmens fest anliegend eingezogen wird, so dass der Fensterrahmen bzw. dessen zu bearbeitende Rahmenecke immer eine genau definierte Lage zu den beiden Bearbeitungseinheiten bzw. Bearbeitungsköpfen und damit für die Bearbeitung einnimmt. In der eingezogenen Stellung wird der fertig geschweißte Fensterrahmen immer nur an einer Rahmenecke bearbeitet. Für das Bearbeiten der anderen Rahmenecken ist es erforderlich, den Fensterrahmen auf dem bereits erwähnten Tisch jeweils um 90° zu drehen. Große Fensterrahmen erfordern zwangsläufig eine breite Transporteinrichtung und einen besonders großen Tisch, wobei letzterer meistens immer breiter als das größte diagonale Maß des Fensterrahmens ist. Der dafür erforderliche Platz ist jedoch vielfach nicht vorhanden. Andererseits erfordert das Drehen eines Fensterrahmens - unabhängig von seiner Größe - verhältnismäßig viel Zeit, die bei modernen Fertigungsstrassen für Fensterrahmen nicht zur Verfügung steht.

Der vorliegenden Erfindung liegt nun die Aufgabe zugrunde, eine verhältnismäßig preiswerte Vorrichtung zum Bearbeiten insbesondere der Schweißraupen von aus Kunststoffprofilen zusammengeschweißten Fensterrahmen zu schaffen, bei der es mit nur zwei Bearbeitungseinheiten bzw. Bearbeitungsköpfen - also mit einer sogenannten Einkopf-Bearbeitungsvorrichtung - möglich ist, neben der üblichen Bearbeitung der Schweißraupen an den Ecken des fertig geschweißten Fensterrahmens auch die Ecken eines bereits eingeschweißten und noch nicht von den Schweißraupen befreiten Kämpfers und Kämpferkreuzes sowie Trapez- und Spitzecken, also Ecken, die keinen rechten Winkel besitzen, zu bearbeiten und/oder sogenannte Stulpecken und Rahmenspitzen zu entfernen.

Zur Lösung dieser Aufgabe wird gemäß der Erfindung bei einer Vorrichtung der eingangs beschriebenen und nur zwei Bearbeitungsköpfe ausweisenden Vorrichtung vorgeschlagen, dass der den Bearbeitungskopf tragende Arbeitsschlitten um die Breite des Fensterrahmens quer zur Transportrichtung desselben verschiebbar und um mindestens 270° drehbar ausgebildet ist.

Durch diese Ausgestaltung wird ein insbesondere an seinen Schweißraupen zu bearbeitender Fensterrahmen während seines Transportes in einer vorgegebenen Position angehalten und festgespannt. Jetzt werden die beiden Bearbeitungseinheiten bzw. Bearbeitungsköpfe einer horizontalen Einkopf-Bearbeitungsvorrichtung in eine vorgegebene Position oberhalb und unterhalb - es kann bei einer vertikalen Bearbeitungsvorrichtung grundsätzlich auch davor oder dahinter sein - der zu bearbeitenden Rahmenecke des Fensterrahmens bewegt und durch Drehung der Anstellschlitten genau auf die jeweilige Schweißebene der zu bearbeitenden Rahmenecke, Kämpferecke oder Kreuzkämpferecke ausgerichtet bzw. in die Bearbeitungslage für eine Stulpecke oder Rahmenspitze gebracht. Gleichzeitig, überlappend oder danach wird das jeweils benötigte Bearbeitungswerkzeug aus seiner Ruhestellung in seine Arbeitsstellung bewegt und anschließend wird die erforderliche Bearbeitung durchgeführt. Im Gegensatz zu den bekannten Bearbeitungsvorrichtungen wird also bei der erfindungsgemäßen Vorrichtung nicht der zu bearbeitende Fensterrahmen, sondern der Bearbeitungskopf und damit das benötigte Bearbeitungswerkzeug für die Bearbeitung genau auf die Schweißebene des Fensterrahmen ausgerichtet. Durch die besondere Ausgestaltung der Bearbeitungsvorrichtung können auch sonst nicht mögliche Sonderbearbeitungen durchgeführt werden.

Weitere Merkmale einer Vorrichtung gemäß der Erfindung sind in den Patentansprüchen 2 bis 14 offenbart.

Die Erfindung sowie weitere Vorteile derselben werden nachfolgend anhand eines in einer Zeichnung in stark vereinfachter Weise gezeichneten Ausführungsbeispieles näher erläutert. Dabei zeigen
- Figur 1: eine Aufrissdarstellung einer Vorrichtung gemäß der Erfindung mit einer unteren und einer oberen Bearbeitungseinheit,
- Figur 2: eine Draufsicht auf die untere Bearbeitungseinheit der Figur 1 und
- Figur 3: die Bearbeitungseinheit der Figur 2 im Bereich einer zu bearbeitenden Ecke eines Fensterrahmens

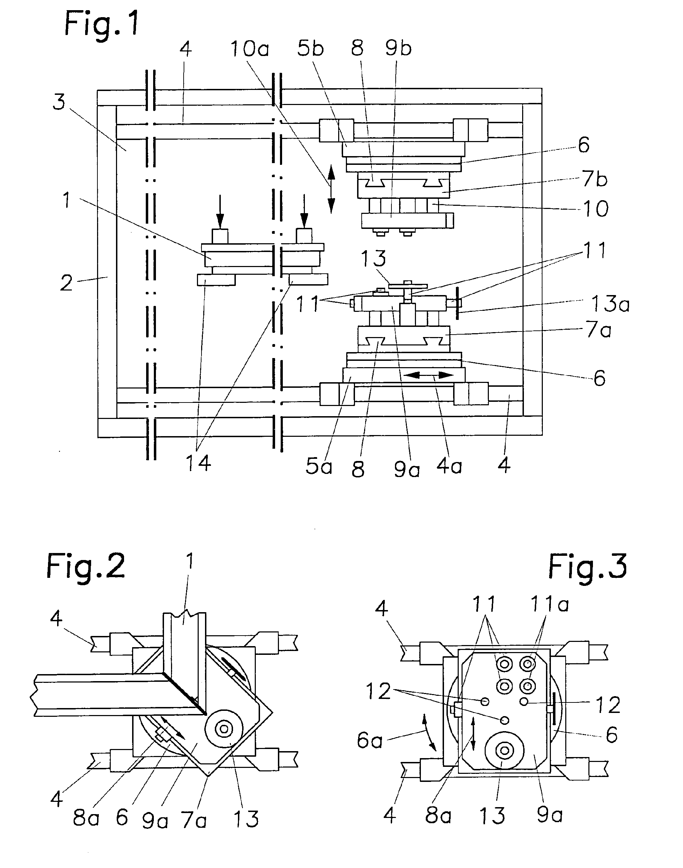

Die Figuren 1 bis 3 der Zeichnung zeigen eine nicht maßstabsgerecht gezeichnete, erfindungsgemäße Vorrichtung, mit der insbesondere die Schweißraupen eines aus Kunststoffprofilen zusammengeschweißten Fensterrahmens 1, der in den Figuren 1 und 3 der Zeichnung jeweils nur ausschnittsweise mit einer zu bearbeitenden Rahmenecke zu erkennen ist, bearbeitet werden kann. Auch einige Sonderbearbeitungen, auf die weiter unten noch eingegangen wird, sind mit der erfindungsgemäßen Vorrichtung möglich. Dabei enthält die in der Zeichnung dargestellte Vorrichtung lediglich in meist nur prinzipmäßiger Darstellung die wesentlichen Teile, die für die noch zu erläuternde Funktion der erfindungsgemäßen Vorrichtung erforderlich sind.

Die in den Figuren 1 bis 3 der Zeichnung dargestellte Vorrichtung zur Bearbeitung eines vollkommen fertig geschweißten Fensterrahmens 1 besteht zunächst aus einem Maschinengestell 2, welches gemäß der Figur 1 der Zeichnung ein Portal 3 aufweist. Dieses Portal 3 und damit das Maschinengestell 2 ist so groß ausgebildet, dass der größtmögliche zu bearbeitende Fensterrahmen 1 hindurchbewegt werden kann. Für die Bewegung des Fensterrahmens 1 ist sowohl vor als auch hinter dem Maschinengestell 2 jeweils eine an sich bekannte Transportvorrichtung vorgesehen, die jedoch zur Verbesserung der Deutlichkeit in der Zeichnung nicht dargestellt sind.

Das Maschinengestell 2 besitzt sowohl oben als auch unten eine Führung 4, die in dem gezeichneten Ausführungsbeispiel jeweils durch zwei mit Abstand voneinander angeordnete, allerdings parallel zueinander verlaufende Führungsstangen, also vollkommen gleich, ausgebildet sind. Auch andere Ausgestaltungen der Führung 4 sind möglich, wobei auch die obere und die untere Führung 4 unterschiedlich sein können. Jede Führung 4 nimmt einen verschiebbaren Anstellschlitten 5a, 5b auf, wobei sich der Anstellschlitten 5a auf der unteren Führung 4 und der Anstellschlitten 5b auf der oberen Führung 4 befindet. Die Verschiebung der Anstellschlitten 5a, 5b in Richtung des Doppelpfeiles 4a kann über einen gemeinsamen Antrieb oder über getrennte Antriebe erfolgen, wobei getrennte Antriebe synchron geschaltet sein können. Solche Antriebe können elektrisch, pneumatisch oder auch hydraulisch ausgebildet sein; die Ansteuerung derselben erfolgt vorteilhaft über einen Rechner. Die Anstellschlitten 5a und 5b sind gemäß der Zeichnung gleich ausgebildet, was sich günstig auf die Herstellung auswirkt. Jedoch ist auch eine unterschiedliche Ausbildung der Anstellschlitten 5a, 5b möglich.

Jeder beiden Anstellschlitten 5a, 4b trägt ein nur vereinfacht dargestelltes und in bekannter Weise aus zwei Teilen bestehendes Drehgestell 6, welches beispielsweise scheiben- oder ringartig ausgebildet sein kann. Dieses Drehgestell 6 nimmt eine parallel zur Transportebene verlaufenden Ebene ein. Dabei ist jeweils ein Teil des Drehgestells 6 fest mit dem Anstellschlitten 5a, 5b verbundenen. Dem anderen, drehbaren Teil des Drehgestells 6 ist ein an sich bekannter Drehantrieb weitgehend beliebiger Bauart zugeordnet, der auch über den bereits oben erwähnten Rechner wahlweise in Richtung des Doppelpfeiles 6a jeweils um einen genau vorgegebenen Winkel ansteuerbar ist. Es ist grundsätzlich möglich, das feste Teil des Antriebes des Drehgestells 6 direkt durch eine besondere Ausgestaltung des Anstellschlittens 5a, 5b zu bilden.

Jedes drehbare Teil eines Drehgestells 6 trägt einen Arbeitsschlitten 7a, 7b. Die Arbeitsschlitten 7a, 7b können dabei gleich, weitgehend gleich oder auch unterschiedlich gestaltet sein. Jeder Arbeitsschlitten 7a, 7b ist auf dem drehbaren Teil des Drehgestells 6 über nur angedeutete Führungen 8 in beiden Richtungen eines Doppelpfeiles 8a und damit senkrecht zur Zeichnungsebene der Figur 1 verschiebbar. Für diese Verschiebung werden an sich bekannte Antriebe verwendet, die in der Zeichnung allerdings nicht dargestellt sind. Diese Antriebe der Arbeitsschlitten 7a, 7b werden, wie bereits bei den anderen Antrieben beschrieben, durch den erwähnten Rechner gesteuert.

Jeder Arbeitsschlitten 7a, 7a nimmt einen Bearbeitungskopf 9a, 9b auf, die gemäß der gewählten Darstellung in der Zeichnung unterschiedlich ausgebildet sind aber auch gleich sein können. Jeder Bearbeitungskopf 9a, 9b ist für sich auf Führungen 10 in Richtung des Doppelpfeiles 10a bewegbar, was bedeutet, dass jeder Bearbeitungskopf 9a, 9b senkrecht zum Arbeitsschlitten 7a, 7b und damit auch senkrecht zur Drehebene bzw. zum Drehgestell 6 und damit auch senkrecht zur Bewegungsebene des Anstellschlittens 5a, 5b, also in der Zeichnungsebene der Figur 1, verschoben und damit aus einer dem Arbeitsschlitten 6a, 6b nahen Lage in eine von dem Arbeitsschlitten 6a, 6b entferntere Lage bewegt bzw. verfahren werden kann. Auch dazu sind besondere, an sich bekannte, aber ebenfalls nicht gezeichnete Antriebe vorgesehen, die auch über den bereits mehrfach erwähnten Rechner in Richtungen des Doppelpfeiles 10a getrennt angesteuert werden.

Jeder Bearbeitungskopf 9a, 9b ist vorteilhaft als Werkzeugträger ausgebildet und besitzt mindestens zwei Aufnahmen 11, 11a für unterschiedliche, jedoch an sich bekannte Bearbeitungswerkzeuge, von denen in der Zeichnung allerdings nur ein Scheibenfräser 13 und ein Sägeblatt 13a dargestellt sind. Dabei sind die Aufnahmen 11, 11a entsprechend der Art der aufzunehmenden Bearbeitungswerkzeuge ausgebildet und zwar so, dass sie diese auswechselbar und sicher aufnehmen können. Es wird darauf hingewiesen, dass die Bearbeitungswerkzeuge der Aufnahmen 11, 11a an dem oberen und unteren Bearbeitungskopf 9a, 9b zumindest teilweise nicht gleich sind. Zumindest ein Teil der an den Bearbeitungsköpfen 9a, 9b vorhandenen Aufnahmen 11, 11a sind verschiebbar bzw. höheneinstellbar ausgebildet und dazu mit besonderen Antrieben versehen. Dies gibt die Möglichkeit, die einzelnen Bearbeitungswerkzeuge aus einer Ruhestellung bzw. einer unwirksamen Grundstellung in eine Arbeitsstellung zu bewegen. Die Antriebe für die Aufnahmen 11, 11a können weitgehend beliebig ausgestaltet sein; sie werden ebenfalls über den schon mehrfach erwähnten Rechner angesteuert.

Die Figur 2 der Zeichnung lässt erkennen, dass sich zwei Halterungen 11 zusammen mit der Halterung 11 für den Scheibenfräser 13 in einer Ebene befinden, die senkrecht zur Drehebene des Arbeitsschlittens 7a, 7b und damit des Drehgestells 6 sowie durch dessen Drehachse verläuft. Die Halterungen 11a sind mit genau vorgegebenem Abstand sind parallel zu den Halterungen 11 vorgesehen und nur an der Oberseite des Bearbeitungskopfes 9a vorhanden. Diese Halterungen 11a können nur durch eine zusätzliche Querbewegung des Bearbeitungskopfes 9a zur Wirkung gebracht werden. Die Halterung 11 für das Sägeblatt 13a befindet sich an einer Seite des Bearbeitungskopfes 9a. Auch die gegenüberliegende Seite des Bearbeitungskopfes 9a besitzt eine seitliche Halterung 11, die beispielsweise einen Bohrer als Bearbeitungswerkzeug aufnehmen kann. Alle Halterungen 11, 11a sind mit ihren Bearbeitungswerkzeugen und den Antrieben so angeordnet und einstellbar, dass sie sich gegenseitig nicht stören.

Neben den teilweise auch unterschiedlichen Halterungen 11, 11a für die Bearbeitungswerkzeuge sind im gezeichneten Ausführungsbeispiel auf dem unteren Bearbeitungskopf 9a drei unter einem Winkel von beispielsweise genau 90° an der Oberseite des Bearbeitungskopfes 9a angeordnete Stifte 12 vorgesehen, die getrennt oder gemeinsam aus einer unteren Grundstellung, in der sie für die Bearbeitungswerkzeuge nicht störend sind, bedarfsweise hochgefahren werden können. Die Funktion dieser Stifte 12 wird weiter unten erläutert.

Für die Bearbeitung insbesondere der Schweißraupen eines aus Kunststoffprofilen zusammengeschweißten Fensterrahmens 1 wird nun davon ausgegangen, dass derselbe über eine bereits erwähnte Transportvorrichtung, beispielsweise an einer seitlichen Führungsleiste anliegend, so weit von hinten, also senkrecht zur Zeichnungsebene, in den Bereich der Vorrichtung geschoben wird, bis er auf einen nicht gezeichneten, kurzzeitig in den Bewegungsbereich des Fensterrahmens 1 bewegbaren Anschlag trifft, der sich beispielsweise an einer genau vorgegebenen Stelle befindet.

Die obere und die untere Bearbeitungseinheit, die jeweils aus einem Anstellschlitten 5a/5b, einem Drehgestell 6, einem Arbeitsschlitten 7a/7b und einem Bearbeitungskopf 9a/9b mit den Halterungen 11 und 11a den dazugehörigen Bearbeitungswerkzeugen zusammen mit ihren Antrieben gebildet sind, nehmen zu diesem Zeitpunkt beispielsweise die in der Figur 1 gezeichnete Lage ein. Diese Lage ist jedoch nicht zwingend. Sobald der Fensterrahmen 1 an dem vorerwähnten Anschlag anliegt, befindet er sich auch im Bereich zweier Auflagen 14, von denen lediglich die in der Zeichnung rechte Auflage 14 ortsfest angeordnet ist. Gegen diese Auflagen 14, die dem Maschinengestell 2 zugeordnet sind, wird der Fensterrahmen 1 mit besonderen Elementen in Richtung der Pfeile 15 festgespannt. Nach diesem Festspannen kann der erwähnte Anschlag wieder entfernt werden, so dass er bei der nachfolgenden Bearbeitung nicht stört.

Sobald der Fensterrahmen 1 in der vorgegebenen Lage gesichert ist, werden die beiden Anstellschlitten 5a, 5b verschoben und die beiden Bearbeitungsköpfe 9a, 9b durch ein entsprechendes Anschalten der Antriebe der beiden Drehgestelle 6 um einen Winkel von genau 45° gedreht, so dass dieselben jetzt ihre Lage gemäß der Figur 3 einnehmen. Jetzt befindet sich zumindest ein Teil der Bearbeitungswerkzeuge genau in der Schweißebene. Diese Stellung, die auch als Arbeitsstellung von Anstellschlitten 5a, Drehgestell 6 und Arbeitsschlitten 7a zu bezeichnen ist, kann über den erwähnten Rechner genau vorgegeben werden.

Diese genau vorgegebene Arbeitsstellung kann beispielsweise auch dadurch erreicht werden, dass zunächst der Anstellschlitten 5a und das Drehgestell 6 in eine Position bewegt werden, die annähernd der Stellung der Figur 3 entspricht. Jetzt werden die Antriebe für den Anstellschlitten 5a und das Drehgestell 6 kurzzeitig entkoppelt. Über seinen Antrieb wird dann der Arbeitsschlitten 7a in eine Richtung des Doppelpfeiles 8a so weit unter den Fensterrahmen 1 verschoben, bis sich die der Zentrierung dienenden Stifte 12 innerhalb des Fensterrahmens 1 befinden. Diese Position des Arbeitsschlittens 7a ist allerdings nicht in der Zeichnung dargestellt. Danach werden die Stifte 12 getrennt oder gemeinsam so weit angehoben, bis sie sich in der Höhenlage des Fensterrahmens 1 befinden. Wird jetzt der Antrieb des Arbeitsschlittens 7a in entgegengesetzter Richtung des Doppelpfeiles 8a angeschaltet - der Arbeitsschlitten 7a bewegt sich wieder nach außen - kommen die Stifte 12 an der Innenseite des Fensterrahmens 1 zum Anliegen und bewirken, dass sich die gesamte untere Bearbeitungseinheit frei und äußerst genau auf die Ebene der Schweißnaht zentriert. Dies ist auch dann der Fall, wenn der Fensterrahmen 1 nicht genau seine vorbestimmte Lage auf den Auflagen 14 einnimmt. Danach werden die Antriebe wieder gekuppelt und die Stifte 12 zurückbewegt.

Die vorerwähnte Zentrierung der unteren Bearbeitungseinheit kann beispielsweise auch für die obere Bearbeitungseinheit erfolgen. Dabei ist es allerdings auch möglich, die genaue Bewegung der unteren Bearbeitungseinheit zu erfassen und auf die obere Bearbeitungseinheit zu übertragen. Eine solche genaue Zentrierung der Bearbeitungseinheiten auf die Schweißebene erweist sich zum Beispiel dann als sinnvoll, wenn die Schweißnähte an den Ecken eines Kreuzkämpfers bearbeitet werden sollen. Hier ist nicht immer sichergestellt, dass die Schweißnähte genau unter einem Winkel von 45° zu den Kunststoffprofilen verlaufen.

In der auf die eine oder andere Weise erreichten Lage der Arbeitsschlitten 7a, 7b wird nun immer jeweils ein Bearbeitungswerkzeug durch Verschieben des entsprechenden Bearbeitungskopfes 9a,9b in Richtung des Doppelpfeiles 10a und gegebenenfalls durch entsprechende Bewegung bzw. Anhebung bzw. Absenkung seiner Halterung 11, 11a in eine vorgegebene Arbeitsstellung gebracht, wie dies für den Scheibenfräser 13 in Figur 3 eingezeichnet ist. Sobald diese Lage erreicht ist, kann durch entsprechende Bewegung des Arbeitsschlittens 7a und des Bearbeitungskopfes 9a die genaue Arbeitsbewegung bzw. der Arbeitshub des Scheibenfräsers 13 ablaufen. Auf diese Weise werden teilweise gleichzeitig oder nacheinander alle benötigten Bearbeitungswerkzeuge des oberen und des unteren Bearbeitungskopfes 9a, 9b zur Wirkung gebracht und die erforderlichen Bearbeitungen durchgeführt. Dabei werden alle Bewegungsabläufe über den bereits mehrfach erwähnten Rechner gesteuert, in dem sie vorher durch ein auf den Fensterrahmen 1 und dessen Profilquerschnitte abgestimmtes Programm gespeichert wurden.

Mit dem Sägeblatt 13a, das ebenfalls in der vorerwähnten Weise in seine Arbeitsstellung gebracht werden kann, ist es möglich, Stulp- ecken oder Rahmenspitzen zu bearbeiten..

Sobald eine Ecke des Fensterrahmens 1 fertigt bearbeitet ist, werden beide Anstellschlitten 5a und 5b in den Bereich der anderen, vorderen Ecke des Fensterrahmens 1 verfahren und die Drehscheiben 6 erneut, jetzt allerdings um 90°, gedreht. Jetzt können dort die entsprechenden Bearbeitungen an der anderen Ecke des Fensterrahmens 1 durchgeführt werden. Wenn nun die beiden vorderen Ecken des Fensterrahmens 1 fertig bearbeitet sind, wird derselbe nach Lösen seiner Festspannung über die weiter oben genannte Transporteinheit so weit durch das Portal 3 des Gestells 2 der Vorrichtung bewegt, bis die beiden hinteren Ecken des Fensterrahmens 1 ihre Lage für eine Bearbeitung erreicht haben. Auch in dieser Lage wird der Fensterrahmen 1 erneut, meist allerdings mit anderen Elementen, festgespannt und dann ebenfalls nacheinander an beiden Ecken in der erforderlichen Weise bearbeitet. Anschließend wird der Fensterrahmen 1 über eine weitere Transporteinheit abtransportiert.

Im Hinblick darauf, dass immer unterschiedlich große Fensterrahmen 1 an ihren Ecken bearbeitet werden müssen, ist, wie bereits weiter oben erwähnt, nur eine Auflage 14 fest angeordnet. Die andere, in der Figur 1 der Zeichnung links dargestellte Auflage 14 ist verschiebbar, vorteilhaft am Gestell 2 vorzusehen.

Aufgrund der beiden verschiebbaren und drehbaren Bearbeitungseinheiten ist es mit der erfindungsgemäßen und beschriebenen Vorrichtung problemlos und in einfacher Weise möglich, auch Kämpferecken und insbesondere Kreuzkämpferecken zu bearbeiten und von den störenden Schweißraupen zu befreien. Gleiches gilt aber auch für Trapez- und Spitzecken und damit für solche Ecken an einem Fensterrahmen 1, die keinen rechten Winkel aufweisen. Hier werden dann die Bearbeitungsköpfe 9a, 9b mit den Bearbeitungswerkzeugen, die Arbeitsschlitten 7a, 7b und das Drehgestell 5 ausschließlich über den Rechner, in dem die entsprechenden Daten des Fensterrahmens 1 gespeichert sind, in diesen Bereichen in ihre Arbeitslage bewegt und dann die erforderlichen Bearbeitungen durchgeführt. Bedarfsweise können hier die Bearbeitungseinheiten über die bereits erwähnten Stifte 12 zentriert werden. Mit dem Sägeblatt 13 können beispielsweise Stulpecken und Rahmenspitzen bearbeitet bzw. entfernt werden.

Die auf dem Bearbeitungskopf 9a angeordneten und der Zentrierung der Bearbeitungseinheit dienenden Stifte 12 sind in der gezeichneten Weise dann nicht einsetzbar, wenn die entsprechende Ecke des Fensterrahmens 1 keinen genau rechten Winkel aufweist. In einem solchen Fall müssen die Stifte 12 auf den entsprechenden Winkel der Ecke des Fensterrahmens 1 voreinstellbar ausgebildet sein. Auch diese Einstellung kann ebenfalls über den Rechner gesteuert werden.

Abschließend wird nochmals darauf hingewiesen, dass alle benötigten Antriebe für die einzelnen Teile der Bearbeitungseinheiten weitgehend beliebig ausgebildet sein können. Gleiches gilt aber auch für die Führungen. In Abänderung des gezeichneten und erläuterten Ausführungsbeispieles ist es möglich, die Drehbewegung und die Hubbewegung der Bearbeitungsköpfe 9a, 9b auch an anderen Stellen vorzusehen.

## Patentansprüche

1. Vorrichtung zum Bearbeiten insbesondere der Schweißraupen von aus Kunststoffprofilen zusammengeschweißten Fensterrahmen, bestehend aus jeweils einer auf jeder Seite des zu bearbeitenden Fensterrahmens befindlichen Bearbeitungseinheit mit je einem Arbeitsschlitten und einem darauf angeordneten Bearbeitungskopf mit mindestens zwei unterschiedlichen und jeweils in einer Halterung gesicherten Bearbeitungswerkzeugen, die über ihre Halterungen zunächst aus einer Grundstellung in eine Arbeitsstellung und in der Arbeitsstellung zur Durchführung eines Arbeitshubes bewegbar sind, sowie aus einer Transporteinrichtung und mindestens einer Spanneinheit,
**dadurch gekennzeichnet,**
**dass** die die Bearbeitungsköpfe (9a, 9b) tragenden Arbeitsschlitten (7a, 7b) in einer parallel zur Transportebene verlaufenden Ebene um mindestens die Breite des Fensterrahmens (1) quer zur Transportrichtung desselben verschiebbar und in einer weiteren, ebenfalls dazu parallelen Ebene, um mindestens 270° drehbar ausgebildet sind.

2. Vorrichtung nach Anspruch 1,
**dadurch gekennzeichnet,**
**dass** der Bearbeitungskopf (9a, 9b) und der Arbeitsschlitten (7a, 7b) mittels eines Anstellschlittens (5a, 5b) quer zur Transportrichtung des Fensterrahmens (1) verschiebbar sind.

3. Vorrichtung nach Anspruch 2,
**dadurch gekennzeichnet,**
**dass** die Drehebene zwischen dem Anstellschlitten (5a, 5b) dem Arbeitsschlitten (7a, 7b) ausgebildet ist.

4. Vorrichtung nach mindestens einem der Ansprüche 1 bis 3,
**dadurch gekennzeichnet,**
**dass** jeder Anstellschlitten (5a, 5b) auf Führungen (4) innerhalb eines Portals (3) eines Maschinengestells (2) verschiebbar angeordnet ist.

5. Vorrichtung nach mindestens einem der Ansprüche 1 bis 4,
**dadurch gekennzeichnet,**
**dass** der Arbeitsschlitten (7a, 7b) senkrecht zur Bewegungsebene des Anstellschlittens (5a, 5b) verschiebbar ist.

6. Vorrichtung nach mindestens einem der Ansprüche 1 bis 4,
**dadurch gekennzeichnet,**
**dass** das Drehgestell (6) senkrecht zur Bewegungsebene Anstellschlittens (5a, 5b) verschiebbar ist.

7. Vorrichtung nach mindestens einem der Ansprüche 1 bis 6,
**dadurch gekennzeichnet,**
**dass** den beiden Anstellschlitten (5a, 5b) ein gemeinsamer Antrieb zugeordnet ist.

8. Vorrichtung nach mindestens einem der Ansprüche 1 bis 6,
**dadurch gekennzeichnet,**
**dass** jedem Anstellschlitten (5a, 5b) ein getrennter Antrieb zugeordnet ist.

9. Vorrichtung nach mindestens einem der Ansprüche 1 bis 8,
**dadurch gekennzeichnet,**
**dass** der Arbeitsschlitten (7a, 7b) zusammen mit dem Bearbeitungskopf (9a, 9b) schwimmend bzw. zentrierbar auf dem Anstellschlitten (5a, 5b) gelagert ist.

10. Vorrichtung nach Anspruch 9,
**dadurch gekennzeichnet,**
**dass** der Bearbeitungskopf (9a, 9b) in den Bereich eines gespannten Fensterrahmens (1) bewegbare Zentriermitteln aufweist.

11. Vorrichtung nach Anspruch 10,
**dadurch gekennzeichnet,**
**dass** die Zentriermittel durch Stifte (12) gebildet sind.

12. Vorrichtung nach Anspruch 9,
**dadurch gekennzeichnet,**
**dass** dem Bearbeitungskopf (9a,9b) Tastsensoren zugeordnet sind.

13. Vorrichtung nach mindestens einem der Ansprüche 1 bis 12,
**dadurch gekennzeichnet,**
**dass** zumindest eine Spanneinheit verschiebbar ausgebildet ist.

14. Vorrichtung nach Anspruch 13,
**dadurch gekennzeichnet,**
**dass** die verschiebbare Spanneinheit auf der Führung (4) eines Anstellschlittens (5a) gelagert ist.
